# EUROPEAN PATENT SPECIFICATION

(11) **EP 2 434 188 B1**
(45) Date of publication and mention of the grant of the patent: **29.06.2022**
(21) Application number: 10777251.9
(22) Date of filing: 14.05.2010
(51) Int. Cl.: F16L 3/18, F16L 7/00, F16L 3/22, F16L 3/26

(54) **STRUCTURAL DUCT BEARING SYSTEM**
STRUKTURELLES TRÄGERSYSTEM FÜR KANÄLE
SYSTÈME DE SUPPORT STRUCTURAL DE CONDUITES

(30) Priority: 20.05.2009 BR PI0904280
(43) Date of publication of application: 28.03.2012
(73) Proprietor: Gomes Fernandes, Paulo Roberto, Cep: 20510-150 Rio de Janeiro - RJ (BR)
(72) Inventor: Gomes Fernandes, Paulo Roberto, Cep: 20510-150 Rio de Janeiro - RJ (BR)
(74) Representative: Mincone, Antimo
(86) International application number: PCT/BR2010/000155
(87) International publication number: WO 2010/132966

(56) References cited:
- EP-A2- 1 221 750
- BR-A- 7 705 678
- BR-A- 9 801 566
- BR-A- PI0 800 385
- BR-U- MU8 600 496
- BR-U- MU8 600 496
- CN-Y- 201 145 098
- US-A- 1 452 497
- US-A- 1 846 550
- US-A- 1 995 716
- US-A- 2 991 807

## Description

### Summary of the Invention

The present patent of invention is related to a duct bearing system for, more specifically to a structural bearing system for specific use in tunnels.

The present invention aims at solving the problems and difficulties that arise when using traditional methods for mounting duct bearing structures in tunnels, using a modular design mode.

### Background of the Invention

The duct lines and pipelines are lines used for carrying fluids, such as petroleum and derivatives thereof, chemical products, alcohol and water, which according to their application are designated as oil pipelines, gas pipelines, aqueducts, ore ducts, polyducts or alcohol ducts. Such flow lines are built using mid-sized and large-sized pipelines that extend over great distances under the ground, through tunnels and pipelines.

The structuring of duct bearing structures within traditional tunnels does not provide for adaptations and modularity in a characteristic geometry, adapted to the curvature of the tunnel, and is generally oversized, within the scope of a project wherein is foreseen/expected an increased traffic of ducts.

In the present state of the art, the building of the entire bearing structure for the remaining lines having been estimated to integrate the project in the future becomes something of a necessity. Such construction is necessary (using the previously designed method) to provide stability to the assembly, in the axial direction of the piping, such fact effectively increasing the final cost of the project due to the oversize to be considered in the project.

It should be pointed out that the above cited over sizing is required due to the fact that the prior art does not consider the concept of modular design in this connection.

Furthermore, the currently existent structures require welding at the assembly, maintenance and repair stages, which effectively becomes the cause of longer work time in the project, with the mobilization of personnel and machinery along the entire worksite (or extension of the tunnel), and excessive risks associated with maintenance and repair activities. CN201145098Y discloses a moving device in a buried casing for pipes. The moving device comprises first brackets, a plurality of roller wheels, second brackets and third roller wheels, wherein, the first brackets are respectively axially arranged along the buried casing, both ends of each bracket are fixed at the inner wall of the casing. According to CN201145098Y, the inner space is divided by the brackets that obstruct the inner section so making difficult the maintenance operations and the installations of new pipelines when the brackets are in configuration of use i.e. fixed to the walls, crossing the inner section of the buried casing. Document US 1995716 also discloses another type of duct bearing system.

The current-day structures also evidence columns made of steel I-beam sections that confine the ducts within 'squares', thereby rendering difficult the access thereto for purposes of maintenance and exchange of parts or components/elements.

### Objects of the Invention

The object of the present invention consists in solving the problems having pointed out in the prior art, by way of the following technical proposals:
- to eliminate any type of welding within the tunnel for the physical assembly of the duct bearing structures by using structures that are prefabricated and mounted/installed within the tunnel with the use of screws;
- to allow that the assembly of the bearing means be performed in stages for every duct, and independently on each side of the tunnel, with the corresponding cost being allocated to each future line rather than to the cost center of the gas duct / oil duct / duct line;
- to eliminate the interference of the steel columns (I-beams), obviating the confinement of ducts within 'squares' devoid of access means to allow the inspection, maintenance and painting work related thereto;
- to eliminate the need of overhead crossbeams and provisional installation of pieces to be adjusted in place, or that require disassembly on future occasions to allow the passage of equipment, pieces and parts of structures, machinery and others;
- to maximize the space available for the circulation of vehicles and personnel;
- to minimize the number of structural interfaces between bearing structures and tunnel walls, thereby reducing the probabilities of errors, the need of adjustments and assembly time, without requiring, for example, the use of a third upper metallic insert;
   to reduce the number of parts, the overall volume of assembly and weight on transportation of the bearing elements into the tunnel;
- to drastically reduce the assembly time;
- to induce the constructive/design geometry such that all mechanical stresses remain within the structure itself;
- to eliminate, in the section obtained by rock blasting/removal, the fastenings depending on the walls and the complexity of the casting of "concrete plinths" (bases); simplification of installation.

### Description of the Invention

The present invention refers to a duct bearing system according to the technical features of claim 1.

The hollow stays or beams are installed within the tunnel directly fastened to the walls thereof or by way of a trapezoidal-shaped concrete plinth, the attachment to the wall comprising the prior installation of metallic bearing elements intended to subsequently screwing the stay or beam to the wall.

The structural bearing project of the system according to the present invention is inspired in avionic structures, more specifically the fuselage, and is designed to withstand large amounts of load and stress.

As may be understood from the figures attached hereto, the bearing system according to the present invention obviates any supersizing of the project due to foreseeing an allowance for additional modules, to be installed by screwing to an already existing structure, thereby dispensing with the need to build the entire bearing structure for the additional lines estimated to be installed in the future, not even for providing stability to the assembly, in the axial direction of the piping.

The system according to the present invention provides structures that are prefabricated and able to be screwed for assembly within the tunnel, for physical assembly of the duct bearing system, the laying of the ducts being performed with the use of motor-driven rollers.

Such technical concept allows the assembly of the bearing assembly by stages relatively to each duct and independently on each side of the tunnel, with the corresponding cost allocated to each future line rather than on the cost center of the gas duct / oil duct / duct line.

The basic bearing structure according to the present invention comprises, in a broad outline, a hollow stay or beam of circular cross section fastened to the wall of the tunnel or by means of a trapezoidal bearing structure with screws, the said hollow stay or beam comprising one or more points for fastening roller bearing support structures, such structures comprising structural attachment or arresting elements, secured by screws to the roller bearing support structure and to the said hollow structural section stay or beam, the structure further comprising upper fitting sections for including additional modules, that are fastened by screws to the tunnel walls.

The fastening of the structure comprised in the system according to the present invention provides for only one fastening screw in each metallic insert, with a total of only two screws per support (on the walls), as well as only two screws for the floor.

As may be derived from the attached figures, the system according to the present invention eliminates the interference of the steel columns ("I-beams"), without confining the ducts in 'squares', allowing free access for inspections, maintenance actions and painting, and even substitutions, and eliminates the need of overhead crossbeams and provisional installation of pieces to be adjusted in place, or that require disassembly on future occasions to allow the passage of equipment, pieces and parts of structures, machinery and others, due to having heights and sizes that might exceed the limits thereof, and additionally the system according to the present invention further maximizes the space allowance for the circulation of vehicles and personnel.

One other obvious advantage of the present invention over the prior art resides in the fact that there is a reduced number of structural interfaces between supports and tunnel walls, thereby reducing the possibilities of errors, the need of adjustments and of assembly time, there being, furthermore, the absence of need of using a third upper metallic insert, from which fact is effectively derived a reduction in the number of parts, volume of assembly and weight in the transportation of the supports into the tunnel.

The system according to the present invention was conceived having in mind the need to induce the constructive/design geometry such that all mechanical stresses remain within the structure itself in order to cancel one another. With the vector components of the internally acting stresses balanced to the maximum, only residual external stresses are transferred, and these always occur in the direction of compression of the concrete. Therefore, we obtain a bearing system that is less dependent from the retaining capacity of the wall attachments. The technical effect of the characteristic shape of the bearing structure according to the present invention provides, by means of fastening means and elements that are also characteristic, a perfect supporting and vector equilibrium.

Furthermore, the system according to the present invention provides the elimination, in the section obtaining by rock breaking/removal, the attachments depending from the walls and the complexity of casting "Concrete plinths" (bases), merely requiring, whenever necessary, a base of very simple and flat geometry for supporting the supports.

Additionally, the present invention provides the installation of a removable "Cargo Boom" in each support, to aid in the lifting of the motorized rollers and of the remaining future sections (modules) to be installed for bearing ducts, to be laid in the future.

### Preferred Modality of the Present Invention

The preferred embodiment of the duct bearing system according to the present invention is illustrated by the figures listed below:

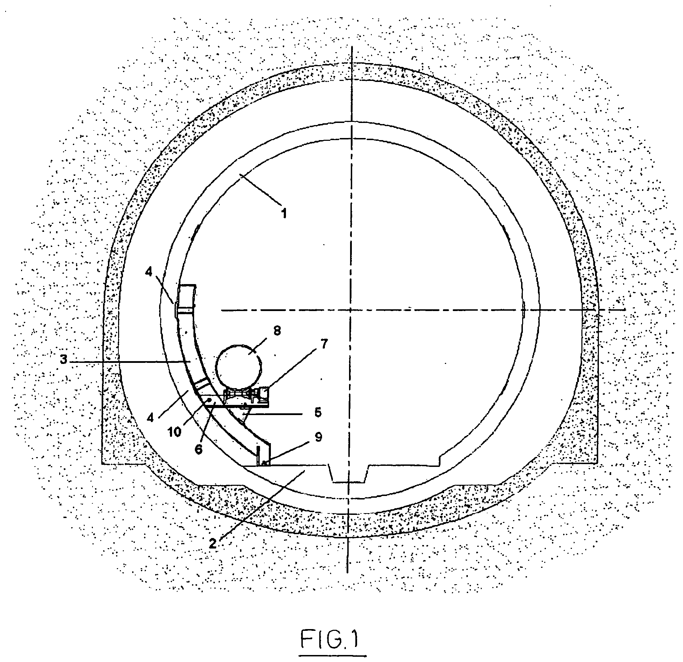

Figure 1 comprises a schematic view of the system according to the present invention, evidencing the wall (1) and the floor (2) of the tunnel wherein is attached the hollow stay or beam (3), by means of fastening elements (4) and screws (9), respectively, the said figure further evidencing the support (5) for roller (7) for duct (8) and arresting element (6) for interconnection of the support and the structure (3) by means of a fastening element (10);

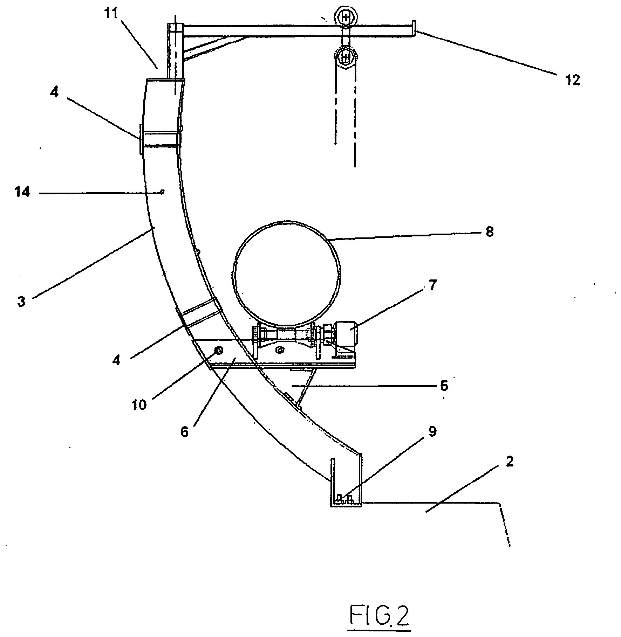

Figure 2 refers to a schematic view of the structuring system evidencing therein the elements already present in Figure 1, there being additionally present a removable "Cargo Boom" (12) provided on the upper part (11) of the hollow stay or beam (3) and a hole (14) for fastening other bearing structures (5).

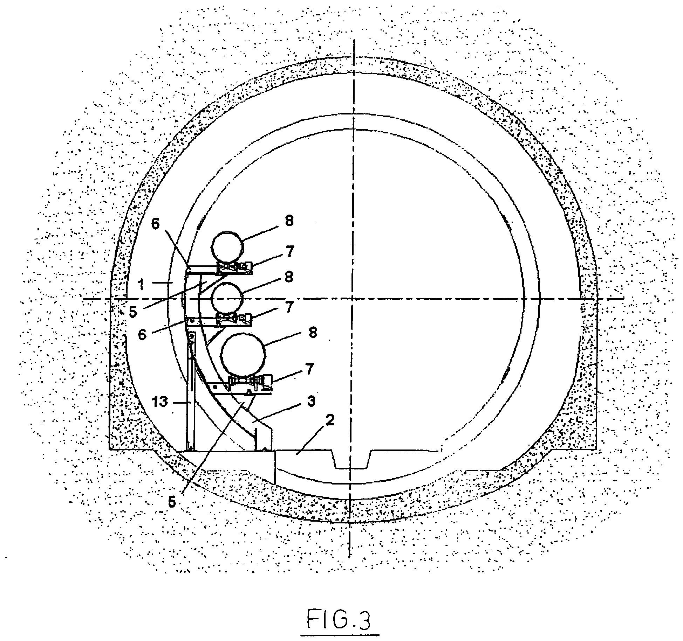

Figure 3 refers to a schematic view of the structuring system evidencing the elements already included in Figures 1 and 2, and additionally showing supporting elements (13) and other supports (5) for ducts (8) of different sizes, installed along the hollow stay or beam (3), in an illustration that is intended to be exemplificative but not restrictive regarding the modularity capability of the system according to the present invention;

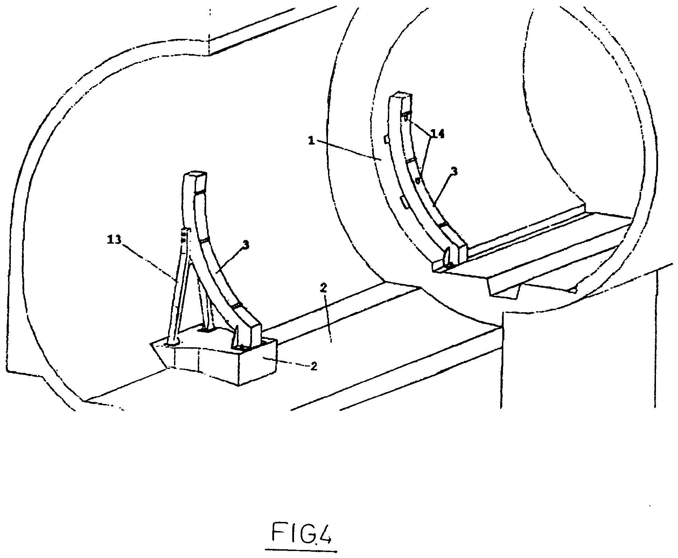

Figure 4 relates to an illustrative perspective view of the system according to the present invention installed in a tunnel in the two embodiments or modalities thereof, to wit, either directly secured to the wall and the floor (2) of the tunnel, or secured by a base and a trapezoidal-shaped element (13) to a concrete base (2) or anchoring element, wherein the said depiction evidences elements already described in Figures 1 to 3 above;

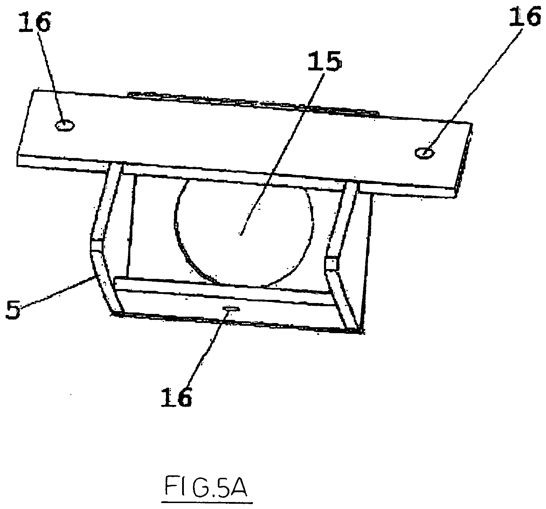

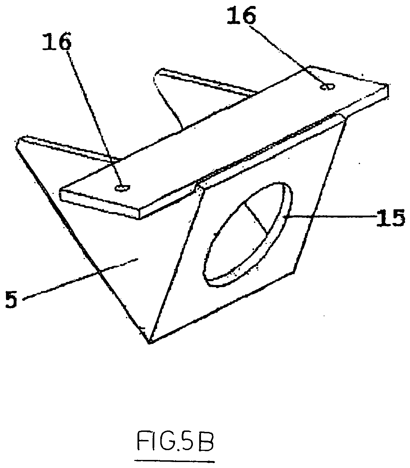

Figures 5A and 5B refer to an illustrative view of the support (5) of the system according to the present invention, evidencing therein the holes (16) drilled for attachment of rollers and/or arresting elements and the opening (16) for screwing the said support (5) to the hollow stay or beam (3);

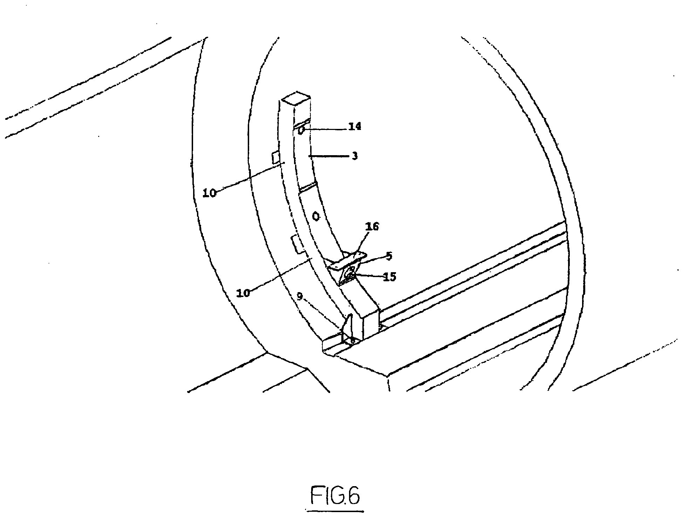

Figure 6 refers to an illustrative view, drawn in perspective, of the system according to the present invention, installed in a tunnel, evidencing elements previously described in Figures 1 to 5B above;

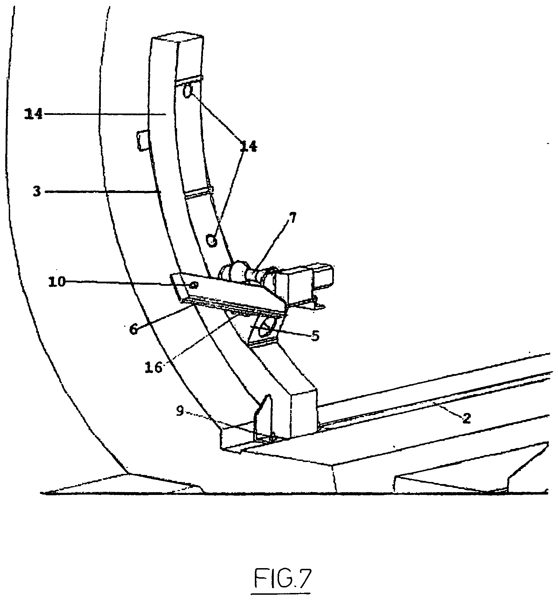

Figure 7 refers to an illustrative view, drawn in perspective, of the system according to the present invention, installed in a tunnel, evidencing elements already described in Figures 1 to 5B above, with emphasis on the roller in its installed state;

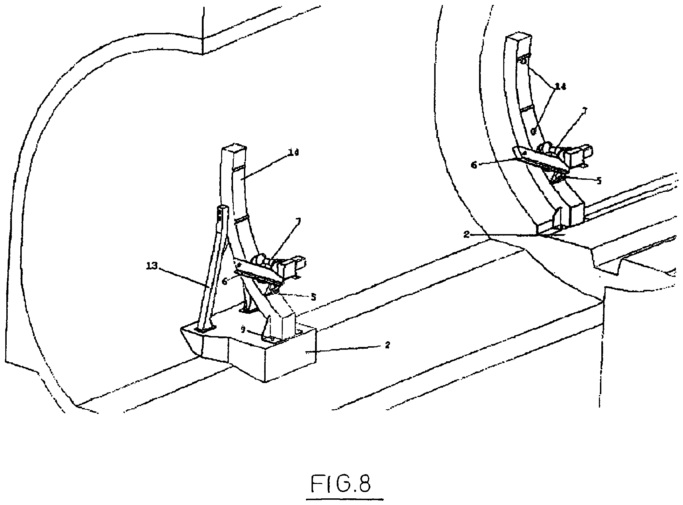

Figure 8 relates to an illustrative view, drawn in perspective, of the system according to the present invention, installed in a tunnel, in its two embodiments or modalities, to wit, either directly affixed to the wall and the floor (2) of the tunnel, or affixed by means of a base and trapezoidal-shaped element (13) to a concrete base (2), the said depiction evidencing elements already described in Figures 1 to 3 above, with emphasis on the roller in its installed state;

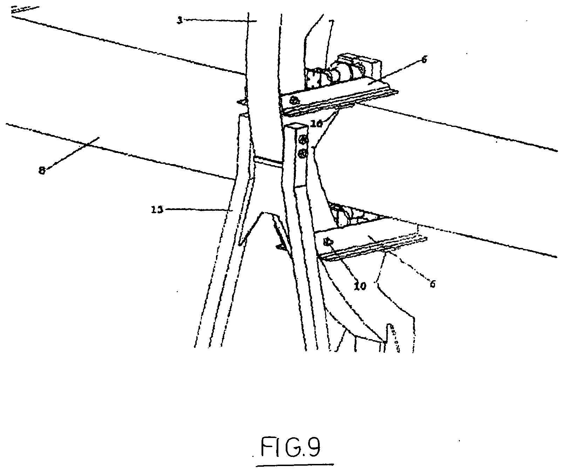

Figure 9 refers to a view with emphasis on two rollers (7) in their installed state and a support element (13), the said depiction evidencing elements already described in Figures 1 to 3 above, with emphasis on the roller in its installed state; and

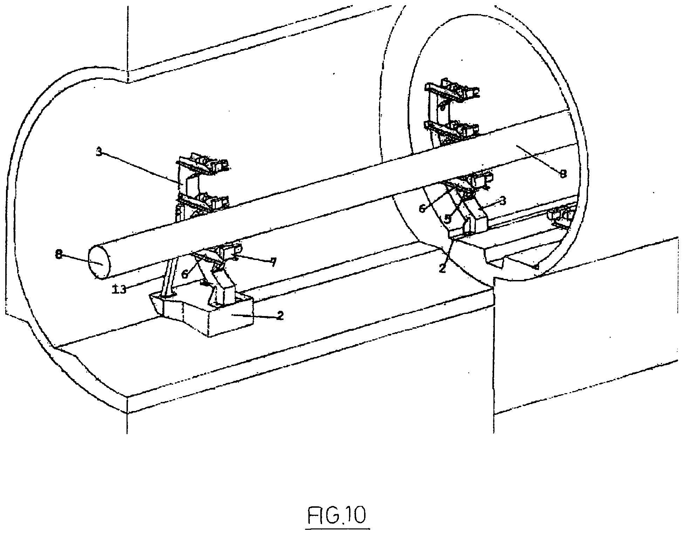

Figure 10 relates to an illustrative view, drawn in perspective, of the system according to the present invention installed in a tunnel, in its two embodiments or modalities, to wit, either directly attached to the wall and the floor (2) of the tunnel or attached by means of a base and trapezoidal-shaped element (13) to a concrete base (2), the said depiction evidencing elements already described in Figures 1 to 3 above and the placement of more than one roller in each beam, including the depiction of the ducts;

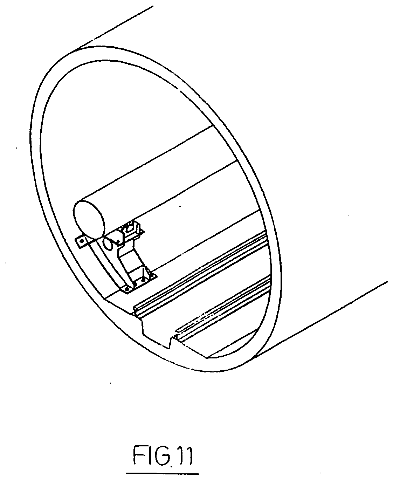

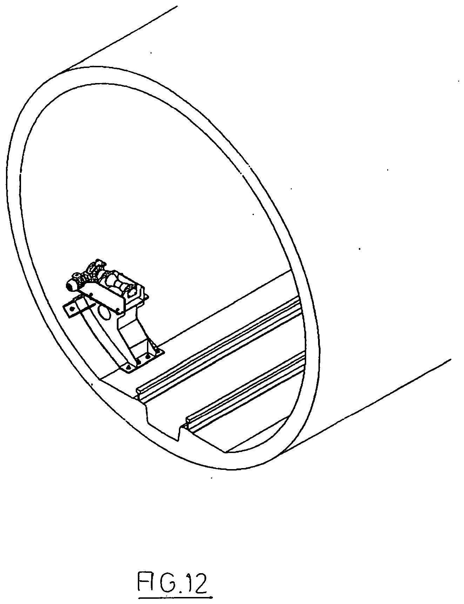

In addition to the preferred embodiment, the present invention further comprises a variant of the riser (or support) of motorized or self-powered rollers that was conceived for laying and definitive bearing of one sole pipe or duct. As may be noted in Figures 11 and 12, the structure is limited to the necessary arc, which in the illustrated case corresponds to position of installation of the line (pipe line or duct line) at a relatively low-level position (near the floor of the tunnel), while in the cases in which it is desired to install the pipeline at a higher position, the riser will have the shape already described for the bearing of multiple lines.

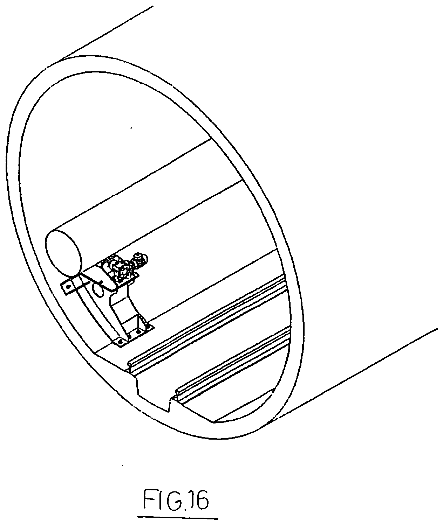

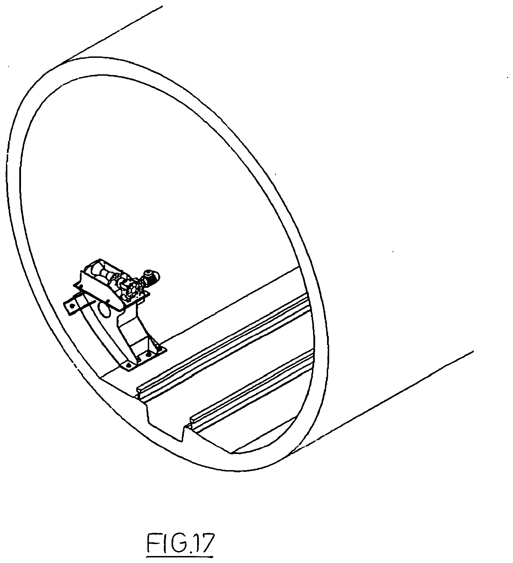

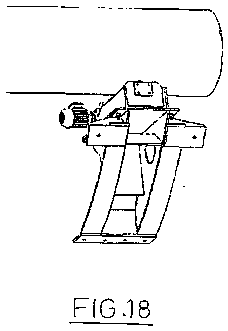

The constructive arrangement may vary, either or not including the central holes (that can be seen in Figs. 11 to 18), and which purpose is: (a) to allow the passage of tubes, electrical conduits and any additional conductors; (b) to allow the performance of inspections in the inner part of the riser; and/or (c) to reduce the structural weight, for the purpose of facilitating handling in assembly operations in the tunnels.

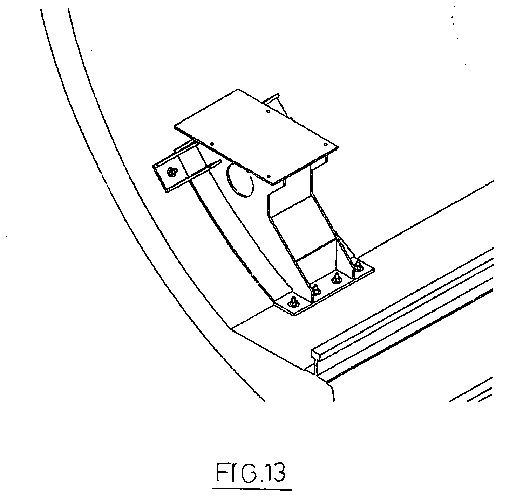

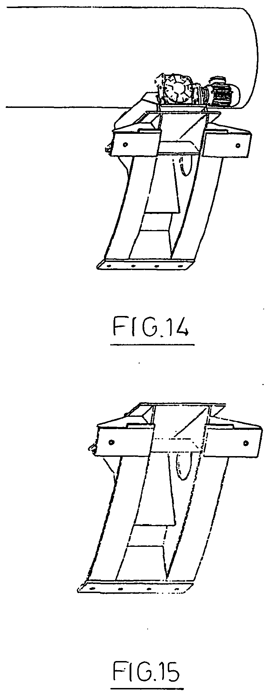

Furthermore, the driving system (motor driving, reduction and driving rollers system) may be mounted in a complementary structure, to be coupled to the riser by means of screws or another type of fastener, as occurs in the case illustrated in Figs. 13 and 15. The purpose of that arrangement is to allow the use of spacers and gaps intentionally included in the holes in the flanges, for the purpose of correcting misalignments, preventing the typical dimensional quality of the civil work structures of the tunnels to jeopardize the alignment of the pipeline.

In situations in which the walls and floor provide the necessary alignment, the structure may be unitary (without division between riser and structure of the driving assembly, and thus without the screwed horizontal flanges). In that case, the driving assembly (rollers and driving means) may be mounted directly to that unitary structure, as present in Figures 12, 14, 16, 17 and 18.

The configuration of the structure of this riser variation, similarly to the riser for multiple pipes, may be subject to small variations, there being included additional upper or lower fastening points, should the structural characteristics of the floor and/or walls so require. In such cases, the lateral "arms" may be present in greater number, as well as the lower base plate may be larger either longitudinally or laterally, as illustrated by Figure 13, in order to accommodate a greater number of attachment anchor bolts, pins or screws.

## Claims

1. A structural duct bearing system comprising stays or beams (3) forming a plurality of bearing structures, at least one roller supporting structure (5), a plurality of motor driven rollers (7), at least one arresting type support (6), a plurality of metallic supports or inserts, wherein the stays or beams (3) are accommodating in the bearing structure thereof the at least one roller supporting structure (5) for bearing the motor driven rollers (7) screwed to the stays or beams, the said at least one roller supporting structure (5) further accommodating the arresting type support (6) welded thereto for connecting the roller supporting structure (5) to the stays or beams (3), the stays or beams (3) having a substantially circular shape, made up of distinct or modular sections, following the geometrical contour of a tunnel having walls (1) and a floor (2), wherein the same are placed, the stays or beams being installed in the tunnel by being directly fastened to the walls (1) thereof, and wherein the structural duct bearing system further comprises fastening elements (4) and screws (9), wherein the fastening to walls comprises the prior installation of the plurality of metallic supports using said fastening elements (4) and screws (9) for subsequently screwing the stays or beams (3) to the walls (1) of the tunnel.

2. A structural duct bearing system, as claimed in claim 1, **characterized in that** the plurality of structures that make up the system are prefabricated and capable of being screwed for assembly within the tunnel.

3. A structural duct bearing system, as claimed in any one of claims 1 and 2, **characterized by** comprising the elimination of any type of welding within the tunnel for purposes of physical assembly of the plurality of structures intended to provide support to the ducts.

4. A structural duct bearing system, as claimed in any one of claims 1 to 3, **characterized in that** the laying of the ducts involves the use of said motor-driven rollers.

5. A structural duct bearing system, as claimed in any one of claims 1 to 4, wherein the stays or beams (3) comprised in the plurality of bearing structures have a circular cross section, fastened directly to the walls (1) of the tunnel or wherein the structural duct bearing system further comprises a plurality of trapezoidal bearing structures (13) and the stays or beams (3) are fastened to said trapezoidal bearing structure (13) and to a trapezoidal-shaped concrete plinth, using said screws (9), wherein said stays or beams (3) comprising one or more points of attachment for the roller supporting structures (5), such roller supporting structures comprising structural fastening elements (6), attached by screws to the roller supporting structure (5) and the stays or beams (3), the bearing structures further comprising an upper fitting section for including additional modules, to be screwed to the tunnel walls.

6. A structural duct bearing system, as claimed in any one of claims 1 to 5, **characterized in that** the fastening of the bearing structure comprised in the system according to the present invention provides only one fastening bolt in each metallic insert, with a total of only two screws per stays or beams (3) on the walls, and only two screws for the fastening to the floor.

7. A structural duct bearing system, as claimed in any one of claims 1 to 6, **characterized by** providing for the installation of a removable "Cargo Boom" in each stay or beam (3).

8. A structural duct bearing system, as claimed in any one of claims 1 to 7, **characterized by** being modular and by comprising two or more roller supporting structures (5).

## Patentansprüche

1. Strukturelles Kanaltragsystem, umfassend Streben oder Balken (3), die eine Vielzahl von Tragstrukturen bilden, zumindest eine Rollenstützstruktur (5), eine Vielzahl von motorbetriebenen Rollen (7), zumindest eine Stütze (6) vom Arretierungstyp, eine Vielzahl von metallischen Stützen oder Einsätzen, wobei die Streben oder Balken (3) in der Tragstruktur davon die zumindest eine Rollenstützstruktur (5) zum Tragen der motorbetriebenen Rollen (7) unterbringen, die mit den Streben oder Balken verschraubt sind, wobei die zumindest eine Rollenstützstruktur (5) ferner die Stütze (6) vom Arretierungstyp unterbringt, die daran geschweißt ist, um die Rollenstützstruktur (5) mit den Streben oder Balken (3) zu verbinden, wobei die Streben oder Balken (3) eine im Wesentlichen kreisförmige Form aufweisen, die aus unterschiedlichen oder modularen Abschnitten bestehen und der geometrischen Kontur eines Tunnels folgen, der Wände (1) und einen Boden (2) aufweist, worin dieselben platziert sind, wobei die Streben oder Balken in dem Tunnel installiert sind, indem sie direkt an den Wänden (1) davon befestigt sind, und wobei das strukturelle Kanaltragsystem ferner Befestigungselemente (4) und Schrauben (9) umfasst, wobei die Befestigung an Wänden die vorherige Installation der Vielzahl von metallischen Stützen unter Verwendung der Befestigungselemente (4) und Schrauben (9) zum anschließenden Verschrauben der Streben oder Balken (3) mit den Wänden (1) des Tunnels umfasst.

2. Strukturelles Kanaltragsystem nach Anspruch 1, **dadurch gekennzeichnet, dass** die Vielzahl von Strukturen, die das System bilden, vorgefertigt ist und zur Montage innerhalb des Tunnels verschraubt werden kann.

3. Strukturelles Kanaltragsystem nach einem der Ansprüche 1 und 2, **dadurch gekennzeichnet, dass** es das Weglassen eines beliebigen Typs von Schweißen innerhalb des Tunnels zu Zwecken der physischen Montage der Vielzahl von Strukturen umfasst, die dazu gedacht sind, Stütze für die Kanäle bereitzustellen.

4. Strukturelles Kanaltragsystem nach einem der Ansprüche 1 bis 3, **dadurch gekennzeichnet, dass** das Verlegen der Kanäle die Verwendung der motorbetriebenen Rollen involviert.

5. Strukturelles Kanaltragsystem nach einem der Ansprüche 1 bis 4, wobei die Streben oder Balken (3), die in der Vielzahl von Tragstrukturen umfasst sind, einen kreisförmigen Querschnitt aufweisen, direkt an den Wänden (1) des Tunnels befestigt, oder wobei das strukturelle Kanaltragsystem ferner eine Vielzahl von trapezförmigen Tragstrukturen (13) umfasst und die Streben oder Balken (3) an der trapezförmigen Tragstruktur (13) und an einem trapezförmigen Betonsockel befestigt sind, unter Verwendung der Schrauben (9), wobei die Streben oder Balken (3) einen oder mehrere Anbringungspunkte für die Rollenstützstrukturen (5) umfassen, wobei solche Rollenstützstrukturen strukturelle Befestigungselemente (6) umfassen, die durch Schrauben an der Rollenstützstruktur (5) und den Streben oder Balken (3) angebracht sind, wobei die Tragstrukturen ferner einen oberen Anschlussabschnitt zum Einschließen von zusätzlichen Modulen zum Verschrauben mit den Tunnelwänden umfassen.

6. Strukturelles Kanaltragsystem nach einem der Ansprüche 1 bis 5, **dadurch gekennzeichnet, dass** die Befestigung der Tragstruktur, die in dem System gemäß der vorliegenden Erfindung umfasst ist, nur einen Befestigungsbolzen in jedem metallischen Einsatz bereitstellt, mit insgesamt nur zwei Schrauben pro Streben oder Balken (3) an den Wänden und nur zwei Schrauben für die Befestigung an dem Boden.

7. Strukturelles Kanaltragsystem nach einem der Ansprüche 1 bis 6, **dadurch gekennzeichnet, dass** die Installation eines entfernbaren "Ladebaums" in jeder Strebe oder jedem Balken (3) bereitgestellt ist.

8. Strukturelles Kanaltragsystem nach einem der Ansprüche 1 bis 7, **dadurch gekennzeichnet, dass** es modular ist und zwei oder mehr Rollenstützstrukturen (5) umfasst.

## Revendications

1. Système de support de conduites structural comprenant des montants ou des poutres (3) formant une pluralité de structures de support, au moins une structure de support de rouleaux (5), une pluralité de rouleaux entraînés par moteur (7), au moins un support de type arrêt (6), un pluralité de supports ou d'inserts métalliques, lesdits montants ou poutres (3) étant reçus dans la structure de support de celui-ci l'au moins une structure de support de rouleau (5) destinée à supporter les rouleaux entraînés par moteur (7) vissés aux montants ou poutres, ladite au moins une structure de support de rouleaux (5) recevant en outre le support de type butée (6) soudé à celui-ci pour relier la structure de support de rouleaux (5) aux montants ou poutres (3), les montants ou poutres (3) possédant une forme sensiblement circulaire, constitués de sections distinctes ou modulaires, suivant le contour géométrique d'un tunnel possédant des parois (1) et un plancher (2), ceux-ci étant placés, les montants ou poutres étant installés dans le tunnel en étant directement fixés aux parois (1) de celui-ci, et ledit système de support de conduites structural comprenant en outre des éléments de fixation (4) et des vis (9), ladite fixation aux parois comprenant l'installation préalable de la pluralité de supports métalliques à l'aide desdits éléments de fixation (4) et desdites vis (9) pour visser ultérieurement les montants ou poutres (3) aux parois (1) du tunnel.

2. Système de support de conduites structural selon la revendication 1, **caractérisé en ce que** la pluralité de structures qui constituent le système sont préfabriquées et capables d'être vissées pour être assemblées à l'intérieur du tunnel.

3. Système de support de conduites structural, selon l'une quelconque des revendications 1 et 2, **caractérisé en ce qu'**il comprend l'élimination de tout type de soudure à l'intérieur du tunnel à des fins d'assemblage physique de la pluralité de structures destinées à fournir un support aux conduites.

4. Système de support de conduites structural, selon l'une quelconque des revendications 1 à 3, **caractérisé en ce que** la pose des conduites implique l'utilisation desdits rouleaux entraînés par moteur.

5. Système de support de conduites structural, selon l'une quelconque des revendications 1 à 4, lesdits montants ou lesdites poutres (3) compris dans la pluralité de structures de support présentant une section circulaire, fixée directement sur les parois (1) du tunnel ou ledit système de support de conduites structural comprenant en outre une pluralité de structures de support trapézoïdales (13) et lesdits montants ou lesdites poutres (3) étant fixés à ladite structure de support trapézoïdale (13) et à un socle en béton de forme trapézoïdale, à l'aide desdites vis (9), lesdits montants ou lesdits poutres (3) comprenant un ou plusieurs points de fixation pour les structures de support de rouleaux (5), ces structures de support de rouleaux comprenant des éléments de fixation structuraux (6), fixés par des vis à la structure de support de rouleaux (5) et aux montants ou poutres (3), les structures de support comprenant en outre une section d'emboîtement supérieure pour comprendre des modules supplémentaires, à visser aux parois du tunnel.

6. Système de support de conduites structural, selon l'une quelconque des revendications 1 à 5, **caractérisé en ce que** la fixation de la structure de support comprise dans le système selon la présente invention fournit uniquement un boulon de fixation dans chaque insert métallique, avec un total de uniquement deux vis par montants ou poutres (3) sur les parois, et uniquement deux vis pour la fixation au sol.

7. Système de support de conduites structural, selon l'une quelconque des revendications 1 à 6, **caractérisé en ce qu'**il prévoit l'installation d'un mât de charge amovible dans chaque montant ou poutre (3).

8. Système de support de conduites structural selon l'une quelconque des revendications 1 à 7, caractérisé ce qu'il est modulaire et en ce qu'il comprend deux, ou plus, structures de support de rouleaux (5).
